# EUROPEAN PATENT APPLICATION

(11) **EP 1 300 211 A1**
(43) Date of publication of application: **09.04.2003**
(21) Application number: 01926076.9
(22) Date of filing: 27.04.2001
(51) Int. Cl.: B23B 31/117

(54) **TOOL HOLDER MOUNTING STRUCTURE**

(30) Priority: 02.05.2000 JP 2000133495; 16.02.2001 JP 2001040428
(71) Applicant: Pascal Kabushiki Kaisha, Itami-shi, Hyogo-ken 664-0006 (JP)
(72) Inventor: KITAURA, Ichiro, PASCAL KABUSHIKI KAISHA, Itami-shi, Hyogo 664-0006 (JP)
(74) Representative: Leson, Thomas Johannes Alois, Dipl.-Ing.
(86) International application number: JP0103751
(87) International publication number: WO01083141

(57) **Abstract**

The present invention provides a tool holder attachment structure that allows a tool holder to be firmly attached to the main shaft of a machining tool and that allows the use of general- purpose tool holders with simple structures.

A holder attachment hole (20) is formed at a free end section of a main shaft (1). A ring- shaped engagement locking is movably mounted in the holder attachment hole (20) so that it can move along the axis. The engagement locking member (30) includes a tapered engagement hole (31) in which the a shank (10) of a tool holder (3) tightly engages. A flat spring (40) firmly biases the engagement locking member (30) outward along the axis. The shank (10) of the tool holder (3) engages with the tapered engagement hole (31) of the engagement locking member (30), and the shank (10) of the tool holder (3) is firmly secured to the main shaft (1) via the engagement locking member (30).

## Description

### Technical field

The present invention relates to a tool holder attachment structure for attaching a tool holder to a main shaft of a machining tool. More specifically, the present invention relates to a tool holder attachment structure in which an engagement locking member is movably mounted in a holder attachment hole of the main shaft to allow axial movement, the shank of the tool holder is engaged with the tapered engagement hole of the engagement locking member, and the shank is secured to the main shaft.

### Background technology

Conventionally, in machining tools such as drill presses, milling machines, and machining centers, a tool holder for supporting a tool is removably (exchangeably) attached to the end of a main shaft. The main shaft rotates the tool to perform machining on a workpiece. In order to removably attach the tool holder to the main shaft, a tapered shank is disposed on the tool holder, and this shank is engaged with a tapered hole formed at the free end of the main shaft. The main shaft is equipped with a retraction mechanism to draw the shank into the tapered hole and engage it.

The tool holder includes: a tool support section for attaching a tool; a shank including a tapered outer perimeter surface; a pull stud secured to the shank; and a flange having a larger diameter than the tapered hole. The retraction mechanism pulls in the tool holder and fits and secures the shank to the tapered hole of the main shaft.

High machining precision of 1 micron error or less is demanded of recent machining tools. These machining tools must perform machining while rotating the main shaft at high speeds of 30000- 40000rpm. Thus, the tool holder and the main shaft rotating at high speeds tend to experience vibrations. To prevent reduced machining precision due to vibrations resulting from the high rotation speed of the main shaft and the tool holder, it would be desirable to firmly secure the tool holder to the main shaft. However, with conventional retraction mechanisms, there is a limit to the retraction strength applied to the shank to draw it in firmly to the tool holder.

A tool holder described in Japanese laid-open patent publication number 9-248727 includes: a main holder unit including a shank and a flange; an engagement sleeve outwardly fitted to the shank so that it can move along the axial direction relative to the shank; and an elastic member mounted between the engagement sleeve and the flange elastically biasing the engagement sleeve away from the flange. When the tool holder is to be attached to the main shaft, there is a gap between the flange and the end surface of the main shaft when the engagement sleeve engages with the tapered hole. Then, when the main holder unit is drawn in, the flange abuts the end surface of the main shaft so that the tool holder is attached to the main shaft.

When the engagement sleeve is engaged with the tapered hole and drawn in to the main holder unit, the engagement sleeve, which is elastically biased toward the base of the tapered hole by the elastic member, is pressed in between the shank and the main shaft. As a result, the engagement sleeve and the main shaft are firmly joined. Also, the slight inward motion along the axis by the engagement sleeve further reduces the diameter, thus providing a firm bond between the engagement sleeve and the shank. To facilitate the narrowing of the diameter of the engagement sleeve, an inner groove is formed on the inner surface of the engagement sleeve.

In the conventional structure for removably attaching the tool holder to the main shaft of a machining tool, there is limit to the retraction strength used by the retraction mechanism to retract the shank. Thus, simply engaging the shank of the tool holder to the tapered hole of the main shaft may not provide a firm connection between the tool holder and the main shaft. To overcome this, a flange may be disposed on the tool holder so that when the tool holder is attached to the main shaft, the shank is engaged with the tapered hole while the flange is abutted against the end surface of the main shaft. However, the margin of production error and thermal expansion generated by machining operations make it difficult to provide a firm connection.

While the tool holder described in Japanese laid-open patent publication number 9-248727 can overcome these problems, the resulting structure, which includes a main holder unit equipped with the shank and the flange, an engagement sleeve, an elastic member, and the like, results in high production costs. The use of machining tools involves preparing multiple tool holders mounted with tools, but the use of complex structures for each of these tool holders increases equipment costs significantly.

The object of the present invention is to allow a tool holder to be firmly attached to the main shaft of a machining tool and to allow the use of general-purpose tool holders with simple structures.

### Disclosure of the invention

The present invention provides a structure for removably attaching a tool holder equipped with a tapered shank to a main shaft of a machining tool. The tool holder attachment structure includes: a holder attachment hole formed at the free end of the main shaft; a ring-shaped or roughly ring-shaped engagement locking member mounted in the holder attachment hole to allow movement along an axis, the engagement locking member being formed with a tapered engagement hold tightly engaging with the shank of the tool holder; and an elastic member firmly elastically biasing the engagement locking member outward along the axis. The shank of the tool holder is engaged with the tapered engagement hole of the engagement locking member, the shank of the tool holder is secured to the main shaft via the engagement locking member, and a flange of the tool holder abuts an end surface of the main shaft when the tool holder is secured to the main shaft.

When attaching the tool holder to the main shaft, the shank of the tool holder engages tightly with the tapered engagement hole of the engagement locking member. The shank is then drawn into the tapered engagement hole, and the engagement locking member elastically biased by the elastic member outward along the axis is pushed in between the shank and the main shaft. As a result, the engagement locking member and the shank are tightly and firmly joined so that the engagement locking member and the main shaft are also tightly and firmly joined. Thus, by engaging the shank of the tool holder with the tapered engagement hole of the engagement locking member, the shank of the tool holder can be firmly secured to the main shaft via the engagement locking member.

By providing a structure where there is a slight gap between the flange and the end surface of the main shaft when the shank is engaged with the tapered engagement hole, the shank can be drawn into the tapered engagement hole in an engaged state. Thus, the flange of tool holder can be reliably abutted against the end surface of the main shaft with the shank firmly secured to the main shaft via the engagement locking member. When the tool holder is secured to the main shaft, the flange of the tool holder abuts the main shaft at a large radius from axis, thus significantly reducing vibrations on the tool holder and the like.

Since the tool holder can be attached firmly to the main shaft of the machining tool, the vibrations of the tool holder and the main shaft at high speeds can be reduced and machining precision can be significantly improved. Also, the rotation speed of the main shaft can be increased as needed. Furthermore, since simple and general-purpose tool holders can be used, general-purpose tool holders can be used for machining tools and equipment costs can be kept down.

It would be desirable for the holder attachment hole to be cylindrical. An engagement locking member having a cylindrical surface can be fitted inside the holder attachment hole so that it can move axially. This simplifies the shapes of the holder attachment hole and the engagement locking member, thus reducing production costs.

It would be desirable to form an elastic deformation facilitation section on the engagement locking member to facilitate elastic deformation along the perimeter. When attaching the tool holder to the main shaft, the shank of the tool holder is engaged with the tapered engagement hole of the engagement locking member, and the shank is moved axially inward relative to the engagement locking member. The elastic deformation facilitation section allows elastic deformation of the engagement locking member along the perimeter, thus providing a reliable and firm connection between the engagement locking member and the main shaft.

The elastic deformation facilitation section can be formed as at least one groove formed on the engagement locking member. With the elastic deformation facilitation section formed from at least one groove, elastic deformation is made easier along the perimeter of the engagement locking member.

The elastic deformation facilitation section can be formed as at least one elastic deformation member formed on the engagement locking member. With the elastic deformation facilitation section formed from at least one elastic deformation member, elastic deformation is made easier along the perimeter of the engagement locking member.

The holder attachment hole can include a first attachment hole toward a free end of the main shaft and a second attachment hole communicating with a base end of the first attachment hole and having a smaller diameter than that of the second attachment hole. The engagement locking member can include a first locking member mounted in the first attachment hole and a second locking member mounted in the attachment hole.

When attaching the tool holder to the main shaft, the shank of the tool holder tightly engages with the tapered engagement holes of the first and second locking members. When the shank is then drawn in, the first and second locking members are pressed between the shank and the main shaft, and the tool holder is firmly secured to the main shaft via the first and second locking members.

The holder attachment hole can include a plurality of attachment holes with progressively smaller diameters starting with a free end of the main shaft. The engagement locking member can include a plurality of locking members mounted in the attachment holes.

When attaching the tool holder to the main shaft, the shank of the tool holder tightly engages with the tapered engagement holes of the engagement locking members. When the shank is then drawn in, the engagement locking members are pressed between the shank and the main shaft, and the tool holder is firmly secured to the main shaft via these engagement locking members.

The engagement locking members can be formed from a plurality of sectional locking members disposed in a perimeter ring formation. Since the engagement locking members are formed from a plurality of sectional locking members disposed in a perimeter ring formation, the engagement locking member can be reliable deformed along the perimeter.

### Brief description of the drawings

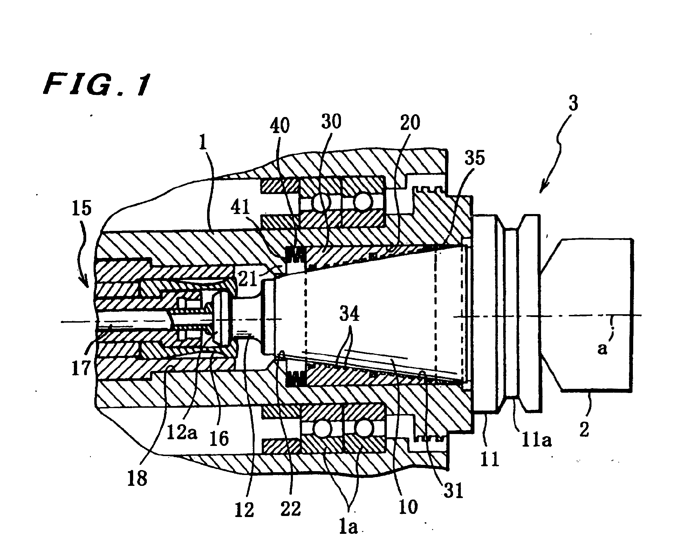

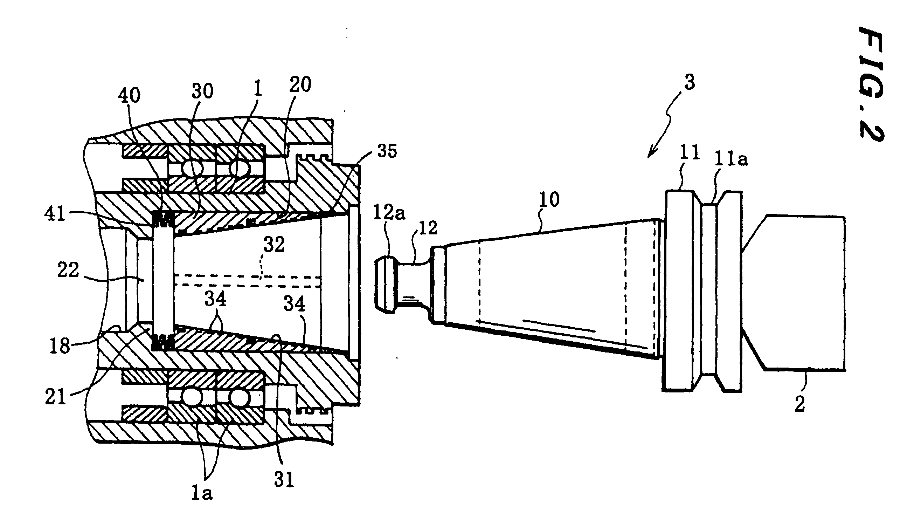

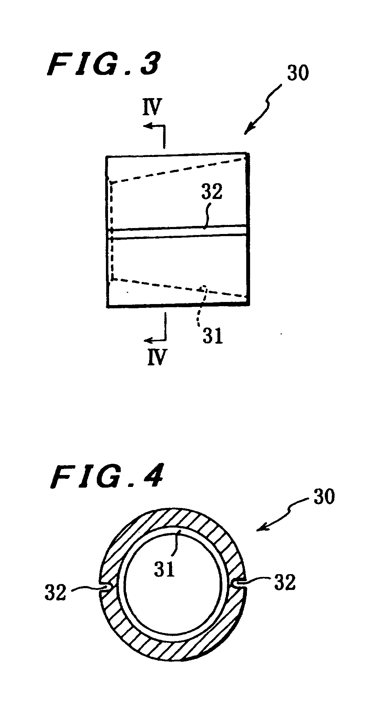

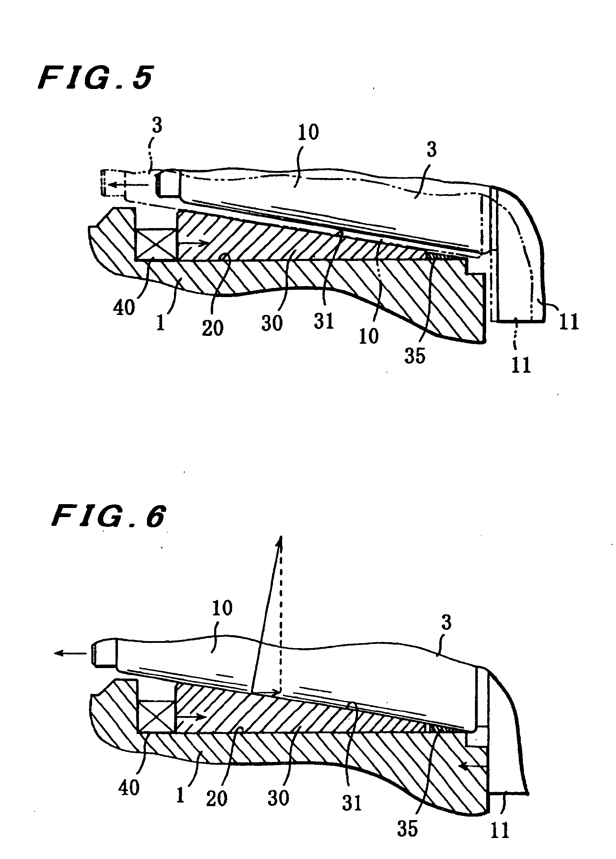

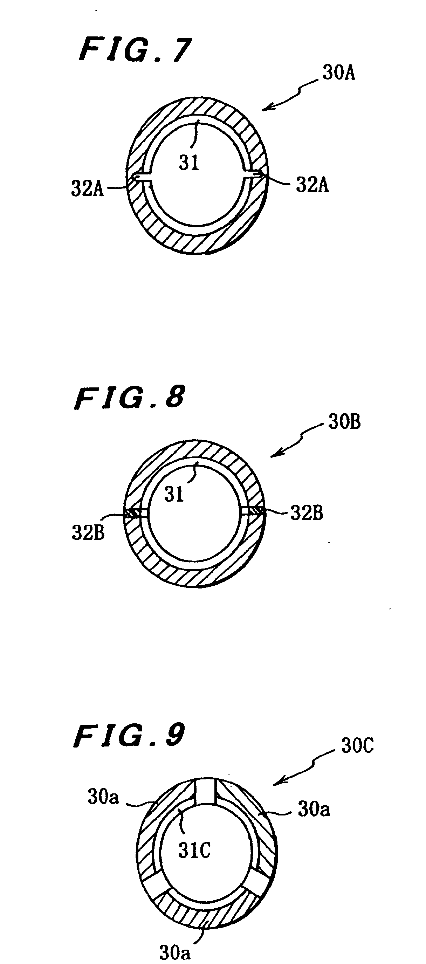

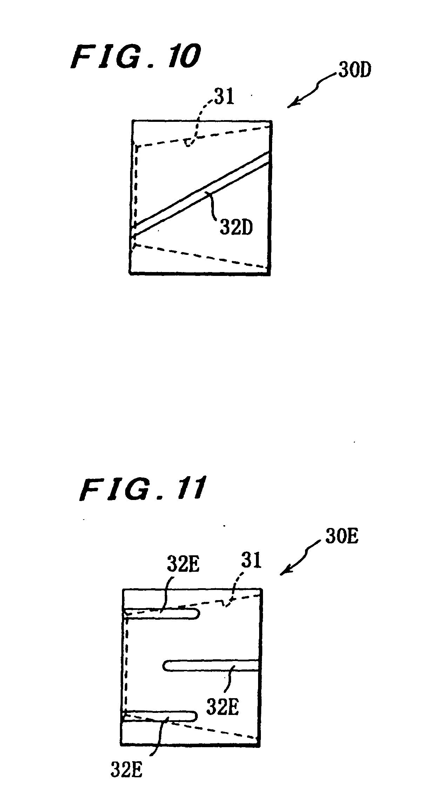

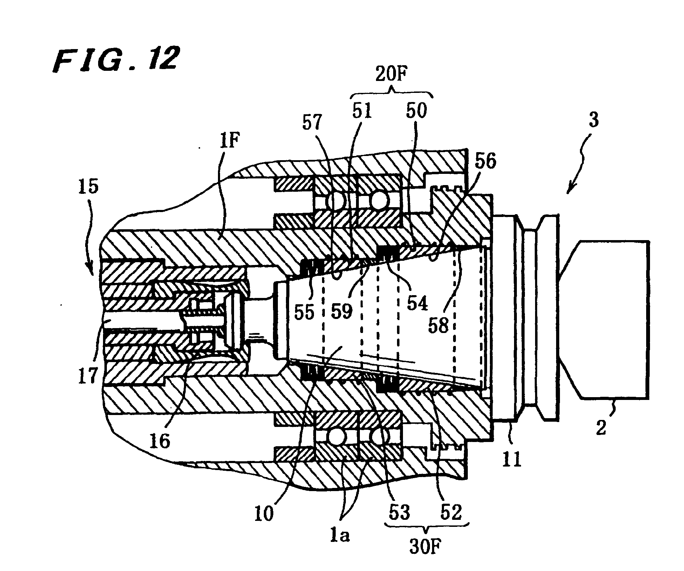

Fig. 1 is a vertical cross-section drawing of a tool holder attachment structure (with the tool holder attached) according to an embodiment of the present invention. Fig. 2 is a vertical cross-section drawing of a tool holder attachment structure (with the tool holder not attached) according to an embodiment of the present invention. Fig. 3 is a side-view drawing of an engagement locking member. Fig. 4 is a cross-section drawing along the IV-IV line from Fig. 3. Fig. 5 is a simplified vertical cross-section drawing of a tool holder attachment structure (before the tool holder attached). Fig. 6 is a simplified vertical cross-section drawing of a tool holder attachment structure (with the tool holder attached). Fig. 7 through Fig. 9 are vertical cross- section drawings of different alternative embodiments of the engagement block members. Fig. 10 and Fig. 11 are side-view drawings of alternative engagement block members. Fig. 12 through Fig. 15 are vertical cross-section drawings of different alternative embodiments of tool holder attachment structures.

### Preferred embodiments of the invention

Referring to the figures, the following is a description of an embodiment of the present invention.

This embodiment presents an example in which the present invention is implemented as a structure for removably attaching a tool holder to the main shaft of a machining tool equipped with an automatic tool switching device, e.g., a machining center.

Referring to Fig. 1 and Fig. 2, a tool holder 3 includes a tapered shank 10 and a flange 11 having a diameter larger than that of the shank 10. A tool 2 can be removably mounted to the tool holder 3. An engagement groove 11a is formed on the outer perimeter of the flange 11 to allow engagement with an arm of an automatic tool changer (ATC). A pull stud 12 is disposed integrally with the base end of the shank 10. A retraction mechanism 15 disposed on the main shaft 1 engages an engagement section 12a of the pull stud 12 with a collet 16, and pulls shank 10 by pulling a draw bar 17 towards the left in Fig. 1. The collet 16, the draw bar 17, and the like are held in a holding hole 18 formed in the main shaft 1.

The present invention's tool holder attachment structure for removably attaching the tool holder 3 to the main shaft 1 includes: a holder attachment hole 20 formed at the end of the main shaft 1; a ring-shaped engagement locking member 30 movably mounted in the holder attachment hole 20 along an axial center a of the main shaft 1 and including a tapered engagement hole 31 that tightly engages with the shank 10 of the tool holder 3; and a plurality of disc springs 40 (corresponds to the elastic members) firmly biasing the engagement locking member 30 outward along the axial center (to the right in Fig. 1). The main shaft 1 is rotatably supported on the machining tool by a plurality of bearings including a bearing 1a.

The holder attachment holder 20 is formed in a cylindrical hole co-axial with the axial center a of the main shaft 1. The axial length of the holder attachment hole 20 is slightly shorter than the axial length of the shank 10 of the tool holder 3. The inner side of the holder attachment hole 20 along the axial direction (to the left in Fig. 1) communicates with the holding hole 18 via a communicating opening 22, and a bottom 21 of the holder attachment hole 20 formed on the main shaft 1 is disposed in a ring-shaped manner around the communicating opening 22.

Referring to Fig. 1 through Fig. 4, the engagement locking member 30 is formed with a wedge-shaped cross-section with a cylindrical outer perimeter surface and an inner surface formed that is tapered with an increasing diameter toward the outside along the axial center. The engagement locking member 30 is fitted inside the holder attachment hole 20 so that it can move along the axial center. A ring-shaped stopper member 35 or the like is secured to the inner surface at the outer end along the axial center of the holder attachment hole 20, and this stopper member 35 prevents the engagement locking member 30 from slipping outward along the axial center from the holder attachment hole 20.

A pair of grooves 32 are formed on the outer surface of the engagement locking member so that they are symmetrical relative to the axial center. The grooves 32 facilitate elastic deformation along the perimeter of the engagement locking member 30 when the shank 10 moves inward along the axial center relative to the engagement locking member 30 while the shank 10 of the tool holder 3 is tightly engaged with the tapered engagement hole 31 of the engagement locking member 30. The grooves 32 are formed parallel with the axial center a. A plurality of ring-shaped grease-filled grooves 34 are formed on the inner surface of the tapered engagement hole 31.

Referring to Fig. 1 and Fig. 2, a spring holding section 41 is formed in the holder attachment hole 20 so that it is interposed between the bottom section 21 and the engagement locking member 30 when the engagement locking member 30 is mounted in the holder attachment hole 20. Disc springs 40 are mounted in the spring holding section 41, and these disc springs 40 firmly bias the engagement locking member 30 toward the outside along the axial center.

The operations and advantages of this tool holder attachment structure will be described.

Referring to Fig. 2, when the tool holder 3 is removed from the main shaft 1, the engagement locking member 30 is elastically biased by the disc springs 40 toward the outside along the axial center (in the direction of the arrow) as shown in Fig. 5 so that it is disposed at a standby position where it is maximally displaced toward the outside along the axial center.

Referring to Fig. 1, when the tool holder 3 is attached to the main shaft 1, the shank 10 of the tool holder 3 engages with the tapered engagement hole 31 of the engagement locking member 30 as indicated by the dotted lines in Fig. 5. With the engagement locking member 30 positioned at the standby position, a gap is left between the flange 11 of the tool holder 3 and the end surface of the main shaft 1.

Next, with the shank 10 tightly engaged with the tapered engagement hole 31, the tool holder 3 is drawn into the tapered engagement hole 31 by the retraction mechanism 15. Referring to Fig. 6, the engagement locking member 30 is also moved inward along the axial center. The flange 11 of the tool holder 3 abuts the end surface of the main shaft 1, so that the tool holder 3 is attached to the main shaft 1.

The engagement locking member 30, which is elastically biased firmly outward along the axial center by the disc springs 40, is displaced slightly inward along the axial center and pressed between the shank 10 and the main shaft 1. As a result, the engagement locking member 30 and the shank 10 are tightly and firmly joined. When the shank 10 is moved inward along the axial center relative to the engagement locking member 30, the engagement locking member 30 is elastically deformed along the perimeter so that the elastic locking member 30 and the main shaft 1 are also firmly joined.

Thus, the shank 10 of the tool holder 3 is engaged with the tapered engagement hole 31 of the engagement locking member 30, thus allowing the shank 10 of the tool holder 3 to be firmly secured to the main shaft 1 via the engagement locking member 30 with at least several times the strength of the biasing (indicated by the arrows in Fig. 6) provided by the disc spring 40. When the tool holder 3 is secured to the main shaft 1, the flange 11 of the tool holder 3 abuts the end surface of the main shaft 1 at a position where the radius from the axial center a is relatively large, thus greatly contributing to vibration reduction and the like for the tool holder 3.

Since the tool holder 3 can be firmly attached to the main shaft 1 of the machining tool, the vibrations from the high-speed rotation of the main shaft 1 and the tool holder 3 can be reduced and machining precision can be reliably improved. Since the structure allows the use of the simple and general-purpose tool holder 3, the general-purpose tool holder 3 can be used for different types of tool holders mounted with tools. This provides significant advantages in terms of equipment costs.

Since the holder attachment hole 20 formed in the main shaft 1 is a cylindrical hole, the engagement locking member 30 having a cylindrical surface can be fitted inside the holder attachment hole 20 so that it can move along the axis. The simple shapes of the holder attachment hole 20 and the engagement locking member 30 provides advantages in terms of production costs.

A pair of grooves 32 is formed on the outer surface of the engagement locking member 30 to facilitate elastic deformation of the engagement lock member 30 along its perimeter. When the tool holder 3 is to be attached to the main shaft 1, the shank 10 of the tool holder 3 is engaged with the tapered engagement hole 31 of the engagement locking member 30 and the shank 10 is moved inward along the axis relative to the engagement locking member 30 so that the engagement locking member 30 is elastically deformed along the perimeter at the positions of the pair of grooves 32. This provides a firm and tight connection between the engagement locking member 30 and the main shaft 1.

Since the pair of grooves 32 are formed symmetrically relative to the axis, the grooves 32 can reliably prevent rotational vibrations. Also, the pair of grooves 32 allow elastic deformation to be facilitated easily, thus allowing the engagement lock member 30 to be formed with a simple structure.

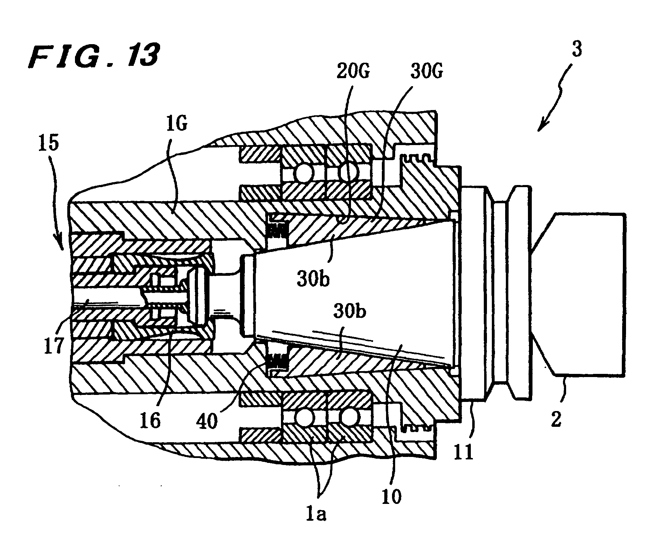

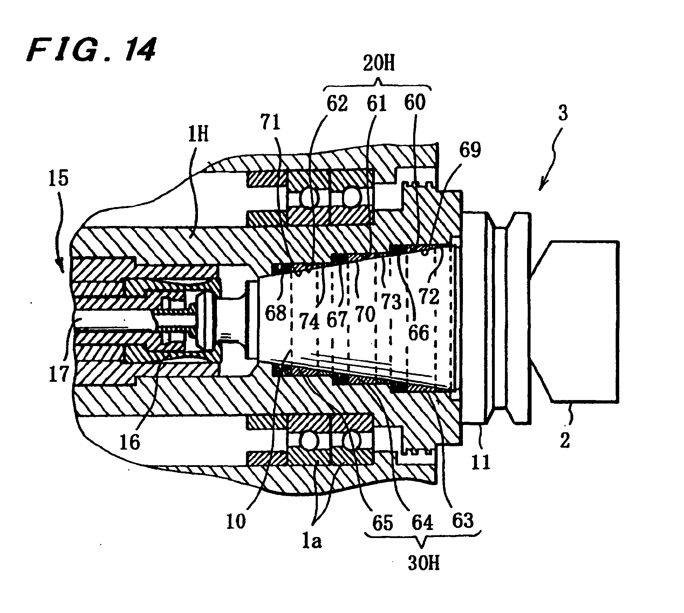

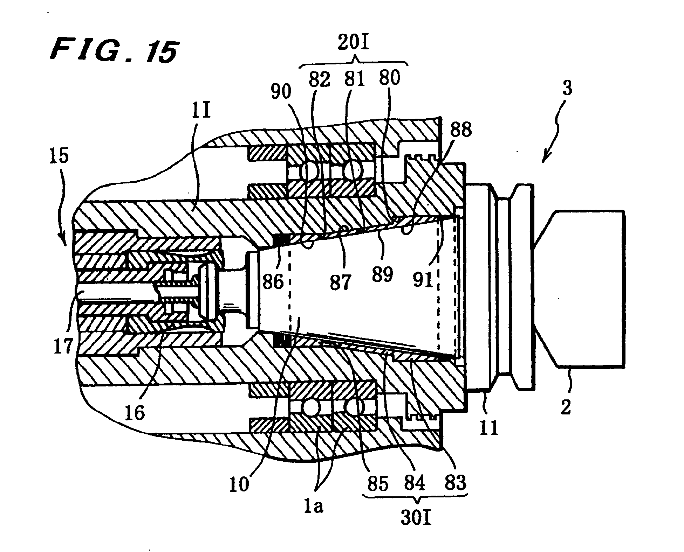

Next, alternative embodiments will be described. Elements essentially identical to those from the embodiment described above will be assigned like numerals and corresponding descriptions will be omitted.
1) Referring to Fig. 7, a pair of grooves 32A are formed on the inside surface of an engagement locking member 30A symmetrically relative to the axis to facilitate elastic deformation along the perimeter of the engagement locking member 30A.
2) Referring to Fig. 8, an engagement locking member 30B is separated into two sections so that there is axial symmetry. Elastic deformation members 32B, formed from a synthetic resin or a synthetic rubber, are disposed to connect the separated the sections of the engagement locking member 30B so that elastic deformation along the perimeter of the engagement locking member 30B is facilitated.
3) Referring to Fig. 9, an engagement locking member 30C is formed from three sectional locking members 30a disposed symmetrically around the axis in a ring formation. These sectional locking members 30a are formed with a tapered engagement hole 31C. In this case, it would be desirable for some sort of guide member to be permanently disposed on the main shaft 1 to guide the three sectional locking members 30a along the axis so that the sectional locking members 30a can maintain their axially symmetrical positions and so that elastic deformation along the perimeter is provided.
4) Referring to Fig. 10, a helical groove 32D is formed on the outer surface of an engagement locking member 30D to facilitate elastic deformation along the perimeter of the engagement locking member 30D. It would also be desirable in this case to form a pair of axially symmetrical grooves 32D.
5) Referring to Fig. 11, six slits 32E or the like are formed on an engagement locking member 30E to facilitate elastic deformation along the perimeter of the engagement locking member 30E. Of these slits 32E, three slits 32E extend inward from the outer end of the axis up to an intermediate position, and the remaining three slits 32E extend outward from the inner end of the axis to an intermediate position. These slits 32E are disposed in an alternating manner. As a result, the engagement locking member 30E can be disposed in an axially symmetrical manner, and the engagement locking member 30E can be formed in a ring shape without being divided into sections.
6) In the engagement locking members 30, 30A - 30E described above, there can be different variations in the grooves and slits and elastic members serving as the elastic deformation facilitation section, the number and shapes of the sectional locking members, and the like. Of course, the number of elements used can be just one, but it would be desirable to provide multiple elements due to the generation of rotational vibrations.
7) Referring to Fig. 12, a holder attachment hole 20F includes: a first attachment hole 50 toward the free end of the main shaft 1F; and a second attachment hole 51 connected to the base end of the first attachment hole 50 and having a smaller diameter than the first attachment hole 50. An engagement locking member 30F includes: a first locking member 52 mounted in the first attachment hole 50; and a second locking member 53 mounted in the second attachment hole 51. The locking members 52, 53 are formed with tapered engagement holes 56, 57.
   Disc springs 54, 55 provide firm elastic biasing axially outward for the first and second locking members 52, 53. Ring-shaped stopper members 58, 59 or the like are secured to the inner surfaces of the axially outward ends of the first and second attachment holes 50, 51. These stoppers members 58, 59 prevent the first and second locking members 52, 53 from slipping axially outward from the first and second attachment holes 50, 51, respectively.
   In this tool holder attachment structure, when the tool holder 3 is attached to the main shaft 1, the shank 10 of the tool holder 3 engages tightly with tapered engagement holes 56, 57 of the first and second engagement locking members 52, 53. From this state, when the shank 10 is drawn in, the first and second engagement locking members 52, 53 are pressed in between the shank 10 and the main shaft 1. This firmly secures the shank 10 of the tool holder 3 to the main shaft 1 via the first and second engagement locking members 52, 53. Other operations and advantages are roughly identical to those of the embodiment described above.
8) Referring to Fig. 13, a holder attachment hole 20G is formed in a main shaft 1G with a tapered shape that narrows toward the outside. The outer perimeter surface of an engagement locking member 30G is formed with a tapered outer perimeter surface that narrows toward the outside so that it can engage with the holder attachment hole 20G. The inner perimeter surface is formed with a tapered shape that is wider toward the outside. The engagement locking member 30G is formed with a wedge-shaped cross-section, and is mounted in the holder attachment hole 20G.
   The engagement locking member 30G is formed roughly in a ring shape from multiple sectional locking members 30b divided in an axially symmetrical manner along the perimeter. It would be desirable to provide a stopper member to prevent the sectional locking members 30b from slipping out from the holder attachment hole 20G when the sectional locking members 30b are movably mounted along the inner surface of the holder attachment hole 20G. If the sectional locking members 30b are movably guided along the axis, the need for a stopper member is eliminated. When the sectional locking members 30b come into contact with the inner surface of the holder attachment hole 20G, they are restricted from moving any further outward along the axis, thus preventing them from slipping out.
9) Referring to Fig. 14, a holder attachment hole 20H includes: a first attachment hole 60, a second attachment hole 61; and a third attachment hole 62. These holes diminish in diameter going from the free end of a main shaft 1H. An engagement locking member 30H includes: a first locking member 63 mounted in the first attachment hole 60; a second locking member 64 mounted in a second attachment hole 61; and a third locking member 65 mounted in a third attachment hole 62. The locking members 63, 64, 65 are formed with tapered engagement holes 69, 70, 71.
   Disc springs 66, 67, 68 are disposed at the base ends of the attachment holes 60, 61, 62, respectively, and firmly bias the locking members 63, 64, 65, outward along the axis, respectively. Ring-shaped stopper members 72, 73, 74 or the like are secured respectively to the end surfaces toward the free end of the attachment holes 60, 61, 62, respectively. These stopper members 72, 73, 74 prevent the locking members 63, 64, 65 from slipping outward from the attachment holes 60, 61, 62.
   In this tool attachment structure, when the tool holder 3 is to be attached to the main shaft 1H, the shank 10 of the tool holder 3 engages tightly with the tapered engagement holes 69, 70, 71 of the locking members 63, 64, 65. When the shank 10 is then drawn in, the locking members 63, 64, 65 are pressed between the shank 10 and the main shaft 1H so that the shank 10 is firmly secured to the main shaft 1H via the locking members 63, 64, 65. Also, the engagement locking member 30H is formed from the three locking members 63, 64, 65, and the locking members 63, 64, 65 are formed thin radially, thus allowing the locking members 63, 64, 65 to be easily deformed. This provides reliable tight contact between the locking members 63, 64, 65 and both the main shaft 1H and the holder attachment hole 20H. Other operations and advantages of are roughly identical to those of the embodiment described above.
10) Referring to Fig. 15, a holder attachment hole 201 includes: a first attachment hole 80 at the free end of a main shaft 1I; a second attachment hole 81 communicating with the base end of the first attachment hole 80, formed with a smaller diameter than that of the first attachment hole 80, and formed with a tapered shape that narrows toward the base end of the main shaft 1I; and a third attachment hole 82 communicating with the base end of the second attachment hole 81 and having a diameter roughly identical to the diameter at the base end of the second attachment hole 81. The engagement locking member 30I is formed integrally from: a first locking member 83 mounted in the first attachment hole 80; a second locking member 84 mounted in the second attachment hole 81 and formed with a tapered outer surface 87 that can be tightly fitted against the second attachment hole 81; and a third locking member 85 mounted in the third attachment hole 82. The locking members 83, 84, 85 are formed with tapered engagement holes 88, 89, 90.
   A disc spring 86 is disposed at the base end of the third attachment hole 82 to provide firm biasing of the engagement locking member 30I outward along the axis. A ring-shaped stopper member 91 or the like is secured to the inner surface of the free end of the first attachment hole 80. This stopper member 91 prevents the engagement locking member 30I from slipping axially outward from the holder attachment hole 20I.
   In this tool holder attachment structure, when the tool holder 3 is to be attached to the main shaft 1I, the shank 10 of the tool holder 3 tightly engages with the tapered engagement holes 88, 89, 90 of the locking members 83, 84, 85. When the shank 10 is then drawn in, the outer perimeter of the second locking member 84 comes into tight contact with the second attachment hole 81 while the locking members 83, 84, 85 are pressed between the shank 10 and the main shaft 1I. The shank 10 of the tool holder 3 is firmly secured to the main shaft 1I via the locking members 83, 84, 85. The engagement locking member 30I is formed integrally from the three locking members 83, 84, 85, which are formed thin radially. Thus, the locking members 83, 84, 85 can be easily deformed so that the engagement locking member 30I can be tightly fitted against both the main shaft 1I and the holder attachment hole 20I. Other operations and advantages of are roughly identical to those of the embodiment described above.
11) The first and second locking members 52, 53 from Fig. 12, the engagement locking member 30G from Fig. 13, the first, second, and third locking members 63, 64, 65 of the engagement locking member 30H from Fig. 14, and the engagement locking member 30I from Fig. 15 can be implemented using the different engagement locking members described above or using similar engagement locking members.
12) Various other changes may be effected on the embodiments described above as long as they do not depart from the spirit of the present invention.

## Claims

1. In a structure for removably attaching a tool holder equipped with a tapered shank to a main shaft of a machining tool,
a tool holder attachment structure comprising:
a holder attachment hole formed at the free end of said main shaft;
a ring-shaped or roughly ring-shaped engagement locking member mounted in said holder attachment hole to allow movement along an axis, said engagement locking member being formed with a tapered engagement hold tightly engaging with said shank of said tool holder; and
an elastic member firmly elastically biasing said engagement locking member outward along said axis;
wherein said shank of said tool holder is engaged with said tapered engagement hole of said engagement locking member, said shank of said tool holder is secured to said main shaft via said engagement locking member, and a flange of said tool holder abuts an end surface of said main shaft when said tool holder is secured to said main shaft.

2. A tool holder attachment structure as described in claim 1 wherein said holder attachment hole is a cylindrical hole.

3. A tool holder attachment structure as described in claim 1 or claim 2 wherein an elastic deformation facilitating section is formed on said engagement locking member to facilitate elastic deformation of said engagement locking member along a perimeter direction.

4. A tool holder attachment structure as described in claim 3 wherein said elastic deformation facilitating section is at least one slit formed on said engagement locking member.

5. A tool holder attachment structure as described in claim 3 wherein said elastic deformation facilitating section is at least one groove formed on said engagement locking member.

6. A tool holder attachment structure as described in claim 3 wherein said elastic deformation facilitating section is at least one elastic deformation member disposed on said engagement locking member.

7. A tool holder attachment as described in claim 1 or claim 2 wherein:
said holder attachment hole includes a first attachment hole toward a free end of said main shaft and a second attachment hole communicating with a base end of said first attachment hole and having a smaller diameter than that of said second attachment hole;
said engagement locking member includes a first locking member mounted in said first attachment hole and a second locking member mounted in said attachment hole.

8. A tool holder attachment as described in claim 1 or claim 2 wherein:
said holder attachment hole includes a plurality of attachment holes with progressively smaller diameters starting with a free end of said main shaft; and
said engagement locking member includes a plurality of locking members mounted in said attachment holes.

9. A tool holder attachment as described in any one of claim 1 through claim 8 wherein said engagement locking member is formed from a plurality of sectional locking members disposed in a perimeter ring formation.
